# FASCICULE DE BREVET EUROPEEN

(11) **EP 3 885 201 B1**
(45) Date de publication et mention de la délivrance du brevet: **25.01.2023**
(21) Numéro de dépôt: 21159037.7
(22) Date de dépôt: 24.02.2021
(51) Int. Cl.: B60R 19/48, B60R 21/0136

(54) **VÉHICULE DOTÉ D'UN CAPTEUR DE RECUL SÉCURISÉ**
FAHRZEUG MIT EINEM GESICHERTEN RÜCKFAHRSENSOR
VEHICLE PROVIDED WITH A SECURE REVERSE SENSOR

(30) Priorité: 25.03.2020 FR 2002913
(43) Date de publication de la demande: 29.09.2021
(73) Titulaire: Renault s.a.s, 92100 Boulogne Billancourt (FR)
(72) Inventeur: GHIRARDINI, Armand, 78430 Louveciennes (FR); SEIGNEUR, Quentin, 78000 Versailles (FR)
(74) Mandataire: Renault Group

(56) Documents cités:
- DE-A1-102004 037 257
- DE-A1-102015 209 904
- DE-B3-102005 032 082
- KR-A- 20130 071 154
- US-B1- 7 607 705

## Description

La présente invention concerne un véhicule doté d'un capteur de recul sécurisé.

Afin de bien comprendre le positionnement des différentes pièces impliquées dans un véhicule selon l'invention, la description est réalisée en faisant référence à un repère orthonormé direct XYZ lié au véhicule et dans lequel X est un axe longitudinal avant-arrière du véhicule orienté vers l'arrière, Y est un axe transversal orienté vers la droite du véhicule et Z est un axe vertical dirigé vers le haut.

US 7 607 705 divulgue un véhicule selon le préambule de la revendication 1.

Certains véhicules possèdent un capteur de recul placé dans un pare-chocs arrière et destiné à informer le conducteur de la distance qui lui reste à parcourir avant d'impacter un objet situé à l'arrière du véhicule. Cette information est transmise par le biais d'un bip sonore émis dans l'habitacle du véhicule, et dont la fréquence augmente au fur et à mesure que le véhicule se rapproche de l'objet, pour devenir continu lorsque le véhicule est sur le point de toucher ledit objet.

Actuellement ce capteur se retrouve placé derrière une traverse arrière rigide du véhicule, qui a été dimensionnée pour absorber l'énergie produite lors d'un choc arrière du véhicule contre un objet extérieur. Les conséquences d'un tel positionnement sont que, lors d'un choc accidentel à très faible vitesse typiquement inférieure à 4km/h produit contre le pare-chocs arrière, par exemple par un conducteur désirant garer son véhicule en effectuant de petites manoeuvres, le capteur de recul va venir impacter la traverse arrière. Il risque alors d'être endommagé et il faudra alors le changer.

Une première solution pour résoudre ce problème a été de créer une ouverture dans la traverse arrière, placée devant le capteur, afin que celui-ci puisse pénétrer dans ladite ouverture en évitant d'impacter la traverse arrière, lors de petits chocs produits contre le pare-chocs arrière. Or, cette ouverture n'est pas extensible et doit posséder une taille maximale, sous peine de dégrader la fonction d'amortissement de la traverse arrière. Il en résulte que si les petits chocs produits sur le pare-chocs arrière ne sont pas réalisés suivant une direction horizontale le long de laquelle sont alignés le capteur et l'ouverture, le capteur risque de venir impacter un bord de la traverse délimitant ladite ouverture. Il sera alors endommagé et il faudra le remplacer.

Un véhicule selon l'invention possède une traverse arrière conçue pour que le capteur ne vienne jamais l'impacter lors de petits chocs produits sur le pare-chocs arrière, y compris lorsque ces chocs ne sont pas produits rigoureusement le long d'un axe joignant le centre du capteur au centre de l'ouverture.

L'invention a pour objet un véhicule comprenant une traverse arrière d'amortissement de choc, un pare-chocs arrière et un capteur de recul, ledit capteur étant supporté par le pare-chocs.

Selon l'invention, la traverse possède une ouverture située devant le capteur, et un élément de guidage est fixé à la traverse, de manière à guider le déplacement du capteur vers l'ouverture dans le cas d'un choc accidentel à vitesse réduite provoqué sur le pare-chocs arrière par un objet extérieur.

De cette manière, lorsque de petits chocs se produisent sur le pare-chocs arrière du véhicule, le capteur de recul est déplacé vers l'avant du véhicule en direction de la traverse arrière, ledit capteur venant alors au contact d'une paroi de l'élément de guidage pour coulisser le long de celle-ci, afin d'être acheminé vers l'ouverture de la traverse arrière. L'élément de guidage est configuré pour empêcher un impact brutal du capteur contre la traverse en le déviant vers l'ouverture de ladite traverse. Grâce à la présence de l'élément de guidage, le capteur sera toujours dévié vers l'ouverture de la traverse, sans risque de venir percuter ladite traverse et donc d'être endommagé. L'élément de guidage peut, soit faire partie intégrante de la traverse et constituer avec celle-ci une seule et même pièce fabriquée d'un seul tenant, soit constituer une pièce rapportée qui est fixée à ladite traverse par exemple au moyen d'un vissage ou d'un clippage. Avantageusement, le capteur est fixé à un support qui est lui-même solidarisé au pare-chocs arrière, et lorsque de petits chocs se produisent sur le pare-chocs arrière, c'est le support qui se déplace vers la traverse arrière. La traverse est une pièce qui s'étend suivant un axe transversal Y du véhicule, et qui a pour objet de se déformer sous l'effet d'un impact significatif d'un objet contre le pare-chocs arrière afin de protéger des personnes qui seraient assises sur une rangée de sièges arrière dudit véhicule. Avantageusement, la pièce de guidage comprend au moins une paroi débouchant dans l'ouverture de la traverse arrière. L'ouverture de la traverse a des dimensions qui sont supérieures à celles du capteur. L'élément de guidage est configuré de telle sorte que le capteur ne puisse pas venir l'impacter brutalement mais puisse coulisser le long de celui-ci sans accroc et avec une certaine douceur.

Selon une caractéristique possible de l'invention, l'élément de guidage est une pièce solide comprenant une paroi latérale délimitant une première ouverture d'extrémité et une deuxième ouverture d'extrémité élargie par rapport à ladite première ouverture, ladite pièce étant positionnée sur la traverse de sorte que la première ouverture soit insérée dans l'ouverture de ladite traverse et la deuxième ouverture soit placée en vis-à-vis du capteur. De cette manière, l'élément de guidage est une pièce creuse convergente, permettant au capteur de recul, amené à pénétrer dans la deuxième ouverture sous l'effet de petits chocs produits sur le pare-chocs arrière, de glisser le long de la paroi latérale pour atteindre la première ouverture et ainsi se retrouver dans l'ouverture de la traverse.

Selon une caractéristique possible de l'invention, les deux ouvertures de l'élément de guidage sont chacune de forme oblongue et sont disposées l'une par rapport à l'autre en étant coaxiales. Autrement dit, les deux ouvertures d'extrémité s'inscrivent dans deux plans parallèles, et l'axe joignant le centre desdites ouvertures est perpendiculaire auxdits plans. De cette manière, l'élément de guidage présente un caractère de symétrie marqué et est donc facile et rapide à fabriquer. Pour cette configuration, il est aisé de prévoir des éléments d'attache dudit élément de guidage sur ladite traverse. La forme oblongue de l'élément de guidage permet de créer un espace étendu qui peut avantageusement être occupé par des équipements, tels que par exemple des câblages.

Selon une caractéristique possible de l'invention, chacune des deux ouvertures de l'élément de guidage est délimitée par deux bords parallèles reliés entre eux par deux bords arrondis. Il s'agit d'un mode de réalisation particulier d'un élément de guidage qui est facile à usiner.

Selon une caractéristique possible de l'invention, les axes longitudinaux des deux ouvertures de l'élément de guidage sont horizontaux. Cette caractéristique est vraie si le véhicule repose lui-même sur un sol horizontal.

Selon une caractéristique possible de l'invention, l'élément de guidage est fixé à la traverse arrière par clippage. Il s'agit d'un moyen de fixation simple, ne nécessitant, ni un outillage spécifique, ni des manipulations compliquées. Il peut être retiré de la traverse tout aussi facilement, par exemple par une simple déformation élastique.

Selon une caractéristique possible de l'invention, l'élément de guidage est réalisé dans un plastique dur. De cette manière, cet élément est léger, tout en présentant une bonne tenue mécanique. Il est également compatible pour être déformé élastiquement dans le but d'être fixé par clippage sur la traverse ou être retiré de celle-ci.

Selon une caractéristique possible de l'invention, le capteur est fixé à une pièce support qui est elle-même solidarisée au pare-chocs arrière. Pour une telle configuration, lorsque de petits chocs se produisent sur le pare-chocs arrière, c'est cette pièce support à laquelle est fixé le capteur qui se déplace vers la traverse arrière.

Selon une caractéristique possible de l'invention, la traverse arrière est en tôle.

L'invention a pour autre objet un élément de guidage pour la réalisation d'un véhicule selon l'invention.

Selon l'invention, il comprend une paroi latérale délimitant une première ouverture d'extrémité et une deuxième ouverture d'extrémité élargie par rapport à ladite première ouverture, lesdites deux ouvertures étant chacune de forme oblongue et étant disposées l'une par rapport en étant coaxiales. Autrement dit, les deux ouvertures d'extrémité s'inscrivent dans deux plans parallèles, et l'axe joignant le centre desdites ouvertures est perpendiculaire auxdits plans.

Un véhicule selon l'invention présente l'avantage de pouvoir préserver, facilement et de façon sûre, le capteur de recul lorsque de petits chocs se produisent sur le pare-chocs arrière, grâce à une fixation judicieuse d'un élément de guidage léger et de géométrie simple. Il en résulte que cette fonction sécuritaire du capteur de recul est assurée dans le véhicule avec maitrise, sans engendrer de coûts supplémentaires importants.

On donne ci-après, une description détaillée d'un mode de réalisation préféré d'un véhicule selon l'invention, en se référant aux figures suivantes :
[Fig. 1] représente une vue en perspective d'un véhicule, montrant dans quelle zone est située l'invention,
[Fig. 2] représente une vue schématique de côté d'un premier mode de réalisation d'une traverse arrière et d'un capteur de recul d'un véhicule selon l'état de la technique,
[Fig. 3] représente une vue schématique de côté d'un deuxième mode de réalisation d'une traverse arrière et d'un capteur de recul d'un véhicule selon l'état de la technique,
[Fig. 4] représente une vue en perspective d'une traverse arrière et d'un capteur d'un véhicule selon l'invention,
[Fig. 5] représente une vue en coupe d'une traverse arrière et d'un capteur d'un véhicule selon l'invention,
[Fig.6] représente une vue en perspective d'un élément de guidage selon l'invention.

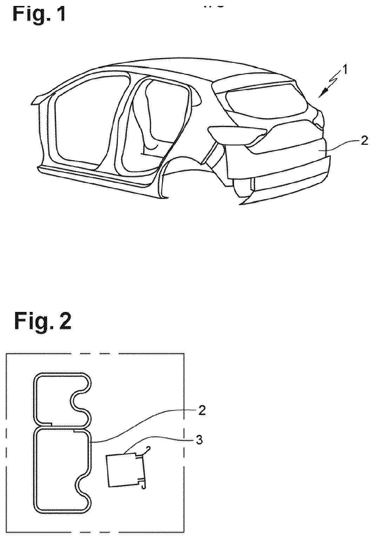

En se référant à la figure 1, certains véhicule 1 comprennent de façon générale, une traverse arrière 2, un pare-chocs arrière et un capteur de recul 3 placé sur ledit pare-chocs arrière. Plus précisément, le capteur 3 est inséré dans un support, qui est lui-même solidarisé au pare-chocs arrière. Ce capteur 3 est activé lorsque le véhicule amorce une marche arrière et se rapproche d'un obstacle extérieur, situé à l'arrière dudit véhicule 1. Ce capteur 3 émet des bips sonores dont la fréquence augmente lorsque le véhicule se rapproche de l'obstacle extérieur, pour se transformer en un son continu lorsque ledit véhicule 1 est sur le point de toucher ledit obstacle.

En se référant à la figure 2, un problème couramment rencontré avec ce type de capteur 3 est que, lorsque par exemple un deuxième véhicule effectue des manoeuvres derrière le présent véhicule pour tenter de se garer, il est susceptible de venir impacter au moins une fois le pare-chocs arrière dudit véhicule. Il en résulte que le capteur 3 de recul qui est arrimé à ce pare-chocs arrière, risque de venir percuter la traverse arrière 2 située juste devant lui, sous l'effet de ces impacts généralement réalisés à faible vitesse, typiquement inférieure à 4km/h. Il est alors fort probable que le capteur 3 soit endommagé suite à cette percussion et qu'il faille le changer. La traverse arrière 2 est préférentiellement réalisée en tôle et est configurée pour pouvoir se déformer et ainsi absorber l'énergie produite lors d'un choc accidentel significatif engendré à l'arrière du véhicule 1, par exemple par un deuxième véhicule, afin de préserver l'intégrité physique de personnes qui seraient assises à l'intérieur dudit véhicule 1. Cette traverse 2 est une pièce qui s'étend selon un axe transversal Y du véhicule, en étant sensiblement horizontale.

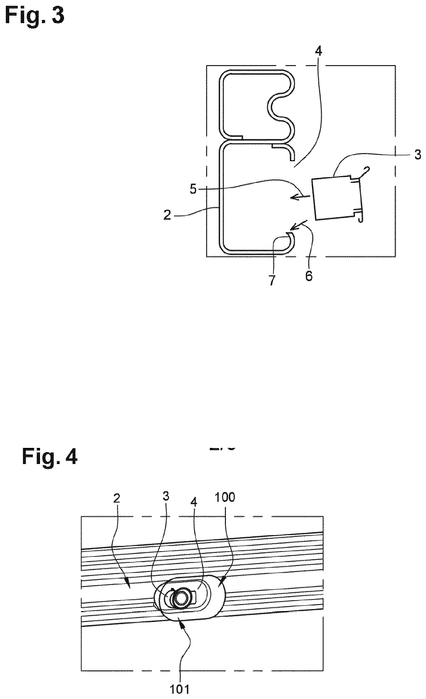

En se référant à la figure 3, une première solution envisagée pour empêcher que le capteur 3 de recul ne vienne percuter la traverse arrière 2 lors de la survenance de petits chocs contre le pare-chocs arrière, a été de pratiquer une ouverture 4 dans la traverse 2, située devant ledit capteur 3. Selon un mode de réalisation particulier, le centre de cette ouverture 4 et le centre du capteur 3 sont alignés suivant un axe longitudinal X et horizontal du véhicule 1. Or cette solution n'est valable que lorsque le capteur 3 est déplacé horizontalement le long dudit axe comme cela est illustré par la flèche 5. En effet, lorsque par exemple le deuxième véhicule est surélevé par rapport au véhicule comprenant le capteur 3 de recul, les petits chocs contre le pare-chocs arrière ne sont plus réalisés suivant une direction horizontale mais suivant une direction oblique dirigée vers le bas, comme cela est illustré par la flèche 6. Dans ce cas, le capteur 3 a tendance à se déplacer vers le bas et risque de venir percuter un bord 7 de la traverse 2 délimitant l'ouverture 4. Le capteur 3 va donc être endommagé et il faudra le changer.

Un véhicule selon l'invention, met en oeuvre une deuxième solution pour empêcher que le capteur 3 de recul ne vienne percuter la traverse arrière 2 lors de la survenance de petits chocs contre le pare-chocs arrière dudit véhicule. Il s'agit de fixer à la traverse arrière 2 un élément de guidage 100 de manière à toujours orienter le déplacement du capteur 3 vers l'ouverture 4 de la traverse arrière 2, quelle que soit la direction des petits chocs produits sur le pare-chocs arrière.

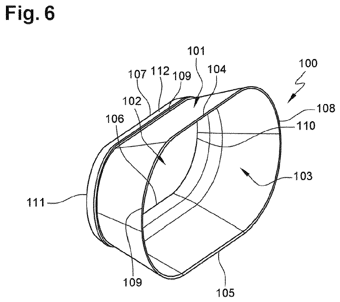

En se référant à la figure 6, l'élément de guidage 100 comprend une paroi latérale 101 divergente délimitant un canal interne possédant une première ouverture 102 d'extrémité et une deuxième ouverture d'extrémité103 élargie par rapport à ladite première ouverture102. De cette manière, la section transversale du canal interne augmente progressivement de la première ouverture 102 d'extrémité vers la deuxième ouverture d'extrémité 103. Les deux ouvertures 102, 103 d'extrémité sont chacune délimitées par deux bords rectilignes 104, 105, 106, 107 et par deux bords arrondis 108, 109, 110, 111 reliant lesdits deux bords rectilignes 104, 105, 106, 107, lesdites deux ouvertures 102, 103 étant coaxiales.

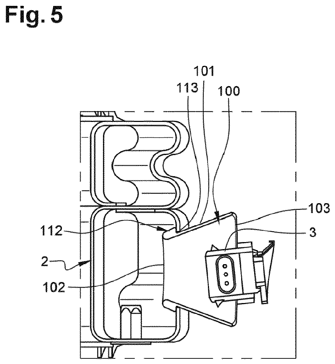

En se référant à la figure 5, la paroi latérale 101 de l'élément de guidage 100 présente un bourrelet externe 112 situé du côté de la première extrémité 102, ledit bourrelet 112 prenant naissance sur le bord de la paroi 101 délimitant la première extrémité 102, et s'étendant sur moins de la moitié de la longueur de ladite paroi et préférentiellement sur moins du quart de ladite longueur. Une extrémité de ce bourrelet 112 située du côté de la deuxième ouverture extrémité 103 définit avec ladite paroi 101 un épaulement 113. Cet élément de guidage 100 est avantageusement réalisé dans un plastique dur, octroyant audit élément 100 une bonne tenue mécanique et une certaine propension à la déformation élastique.

L'élément de guidage 100 est fixé à la traverse 2 par clippage. En effet, cet élément 100 est introduit dans l'ouverture 4 de la traverse arrière 2 par la première ouverture d'extrémité 102. Il est ensuite enfoncé dans ladite ouverture 4 en se déformant élastiquement jusqu'à ce que l'épaulement 113 ait dépassé la paroi de ladite traverse 2 délimitant ladite ouverture. Le bourrelet 112, qui était comprimé se relâche derrière ladite paroi, piégeant alors l'élément de guidage 100 dans l'ouverture 4 de la traverse 2.

En se référant à la figure 4, l'élément de guidage 100 est clipsé à la traverse arrière 2 de sorte que les bords rectilignes 104, 105, 106, 107 des deux ouvertures d'extrémité 102, 103 s'étendent parallèlement à un axe longitudinal de ladite traverse 2. La première ouverture d'extrémité 102 se retrouve devant la deuxième ouverture d'extrémité 103, et le capteur 3 de recul qui est solidarisé au pare-chocs arrière est placé en face et derrière ladite deuxième ouverture d'extrémité 103. Ainsi dans le cas de petits chocs répétés sur le pare-chocs arrière du véhicule 1, dus par exemple à un deuxième véhicule effectuant des manoeuvres pour se garer, le capteur 3 de recul va se déplacer vers l'avant et va systématiquement pénétrer dans la deuxième ouverture d'extrémité 103 de l'élément de guidage. En effet, les dimensions de ladite deuxième ouverture d'extrémité 103 et la disposition du capteur 3 de recul par rapport à ladite deuxième ouverture 103 font que le capteur 3 ne peut que pénétrer dans ladite deuxième ouverture d'extrémité 103, quelle que soit la direction du déplacement vers l'avant dudit capteur 3. Le capteur 3 peut alors, soit poursuivre sa progression vers l'avant à l'intérieur de l'élément de guidage 100 sans toucher la paroi latérale 101, soit venir au contact de ladite paroi latérale 101 puis coulisser le long de celle-ci en étant dirigé vers la première ouverture 102 d'extrémité dudit élément de guidage. En raison de la pente de la paroi latérale 101 de l'élément de guidage 100, la mise en contact du capteur 3 de recul avec ladite paroi 101 latérale s'effectue en douceur, sans générer le moindre choc, préservant ainsi l'intégrité dudit capteur 3. Le capteur 3 va alors se retrouver dans l'ouverture 4 de la traverse 2 sans jamais avoir impacté ladite traverse 2.

## Revendications

1. Véhicule (1) comprenant une traverse arrière (2) d'amortissement de choc, un pare-chocs arrière et un capteur (3) de recul, ledit capteur (3) étant supporté par le pare-chocs, **caractérisé en ce que** la traverse (2) possède une ouverture (4) située devant le capteur (3), et **en ce qu'**un élément de guidage (100) est fixé à la traverse (2), de manière à guider le déplacement du capteur (3) vers l'ouverture (4) dans le cas d'un choc accidentel à vitesse réduite provoqué sur le pare-chocs arrière par un objet extérieur.

2. Véhicule selon la revendication 1, **caractérisé en ce que** l'élément de guidage (100) est une pièce solide comprenant une paroi latérale (101) délimitant une première ouverture (102) d'extrémité et une deuxième ouverture (103) d'extrémité élargie par rapport à ladite première ouverture (102), et **en ce que** ladite pièce (100) est positionnée sur la traverse (2) de sorte que la première ouverture (102) soit insérée dans l'ouverture (4) de ladite traverse (2) et la deuxième ouverture (103) soit placée en vis-à-vis du capteur (3).

3. Véhicule selon la revendication 2, **caractérisée en ce que** les deux ouvertures (102, 103) de l'élément de guidage (100) sont chacune de forme oblongue et sont disposées l'une par rapport à l'autre en étant coaxiales.

4. Véhicule selon la revendication 3 **caractérisé en ce que** chacune des deux ouvertures (102, 103) de l'élément de guidage (100) est délimitée par deux bords parallèles (104, 105, 106, 107) reliés entre eux par deux bords arrondis (108, 109, 110, 111).

5. Véhicule selon l'une quelconque des revendications 3 ou 4, **caractérisé en ce que** les axes longitudinaux des deux ouvertures (102, 103) de l'élément de guidage (100) sont horizontaux.

6. Véhicule selon l'une quelconque des revendications 1 à 5, **caractérisé en ce que** l'élément de guidage (100) est fixé à la traverse arrière par clippage.

7. Véhicule selon l'une quelconque des revendications 1 à 6, **caractérisé en ce que** l'élément de guidage (100) est réalisé dans un plastique dur.

8. Véhicule selon l'une quelconque des revendications 1 à 7, **caractérisé en ce que** le capteur (3) est fixé à une pièce support qui est elle-même solidarisée au pare-chocs arrière.

9. Véhicule selon l'une quelconque des revendications 1 à 8, **caractérisé en ce que** la traverse arrière (2) est en tôle.

10. Elément de guidage (100) pour la réalisation d'un véhicule (1) selon l'une quelconque des revendications 1 à 9, **caractérisé en ce qu'**il comprend une paroi latérale (101) délimitant une première ouverture (102) d'extrémité et une deuxième ouverture (103) d'extrémité élargie par rapport à ladite première ouverture (102), et **en ce que** lesdites deux ouvertures (102, 103) sont chacune de forme oblongue et sont disposées l'une par rapport en étant coaxiales.

## Patentansprüche

1. Fahrzeug (1), das einen stoßdämpfenden hinteren Querträger (2), einen hinteren Stoßfänger und einen Rückfahrsensor (3) aufweist, wobei der Sensor (3) von dem Stoßfänger getragen wird, **dadurch gekennzeichnet, dass** der Querträger (2) eine Öffnung (4) aufweist, die vor dem Sensor (3) angeordnet ist, und dass ein Führungselement (100) an dem Querträger (2) befestigt ist, um die Bewegung des Sensors (3) in Richtung der Öffnung (4) zu führen, falls es zu einem unbeabsichtigten Aufprall mit niedriger Geschwindigkeit kommt, der durch ein externes Objekt auf den hinteren Stoßfänger verursacht wird.

2. Fahrzeug nach Anspruch 1, **dadurch gekennzeichnet, dass** das Führungselement (100) ein festes Teil ist, das eine Seitenwand (101) aufweist, die eine erste Endöffnung (102) und eine zweite Endöffnung (103) begrenzt, die in Bezug auf die erste Öffnung (102) erweitert ist, und dass das Teil (100) auf dem Querträger (2) so positioniert ist, dass die erste Öffnung (102) in die Öffnung (4) des Querträgers (2) eingeführt wird und die zweite Öffnung (103) gegenüber dem Sensor (3) angeordnet ist.

3. Fahrzeug nach Anspruch 2, **dadurch gekennzeichnet, dass** die beiden Öffnungen (102, 103) des Führungselements (100) jeweils eine längliche Form aufweisen und koaxial zueinander angeordnet sind.

4. Fahrzeug nach Anspruch 3, **dadurch gekennzeichnet, dass** jede der beiden Öffnungen (102, 103) des Führungselements (100) von zwei parallelen Rändern (104, 105, 106, 107) begrenzt wird, die durch zwei abgerundete Ränder (108, 109, 110, 111) miteinander verbunden sind.

5. Fahrzeug nach einem der Ansprüche 3 oder 4, **dadurch gekennzeichnet, dass** die Längsachsen der beiden Öffnungen (102, 103) des Führungselements (100) horizontal verlaufen.

6. Fahrzeug nach einem der Ansprüche 1 bis 5, **dadurch gekennzeichnet, dass** das Führungselement (100) durch Clipsen an dem hinteren Querträger befestigt ist.

7. Fahrzeug nach einem der Ansprüche 1 bis 6, **dadurch gekennzeichnet, dass** das Führungselement (100) aus einem harten Kunststoff hergestellt ist.

8. Fahrzeug nach einem der Ansprüche 1 bis 7, **dadurch gekennzeichnet, dass** der Sensor (3) an einem Trägerteil befestigt ist, das seinerseits fest mit dem hinteren Stoßfänger verbunden ist.

9. Fahrzeug nach einem der Ansprüche 1 bis 8, **dadurch gekennzeichnet, dass** der hintere Querträger (2) aus Blech besteht.

10. Führungselement (100) zur Realisierung eines Fahrzeugs (1) nach einem der Ansprüche 1 bis 9, **dadurch gekennzeichnet, dass** es eine Seitenwand (101) aufweist, die eine erste Endöffnung (102) und eine zweite Endöffnung (103) begrenzt, die in Bezug auf die erste Öffnung (102) erweitert ist, und dass die beiden Öffnungen (102, 103) jeweils eine längliche Form aufweisen und koaxial zueinander angeordnet sind.

## Claims

1. Vehicle (1) comprising a rear crossmember (2) for absorbing impacts, a rear bumper and a reversing sensor (3), said sensor (3) being supported by the bumper, **characterized in that** the crossmember (2) has an opening (4) situated in front of the sensor (3), and **in that** a guide element (100) is fastened to the crossmember (2), so as to guide the movement of the sensor (3) towards the opening (4) in the event of an accidental impact at reduced speed on the rear bumper caused by an external object.

2. Vehicle according to Claim 1, **characterized in that** the guide element (100) is a solid component comprising a lateral wall (101) delimiting a first end opening (102) and a second end opening (103) that is enlarged with respect to said first opening (102), and **in that** said component (100) is positioned on the crossmember (2) such that the first opening (102) is inserted in the opening (4) in said crossmember (2) and the second opening (103) is placed opposite the sensor (3) .

3. Vehicle according to Claim 2, **characterized in that** the two openings (102, 103) in the guide element (100) are each of oblong shape and are disposed coaxially with respect to one another.

4. Vehicle according to Claim 3, **characterized in that** each of the two openings (102, 103) in the guide element (100) is delimited by two parallel edges (104, 105, 106, 107) that are connected to each other by two rounded edges (108, 109, 110, 111).

5. Vehicle according to either one of Claims 3 and 4, **characterized in that** the longitudinal axes of the two openings (102, 103) in the guide element (100) are horizontal.

6. Vehicle according to any one of Claims 1 to 5, **characterized in that** the guide element (100) is fastened to the rear crossmember by clip fastening.

7. Vehicle according to any one of Claims 1 to 6, **characterized in that** the guide element (100) is made of a hard plastic.

8. Vehicle according to any one of Claims 1 to 7, **characterized in that** the sensor (3) is fastened to a support component which is itself secured to the rear bumper.

9. Vehicle according to any one of Claims 1 to 8, **characterized in that** the rear crossmember (2) is made of sheet metal.

10. Guide element (100) for the realization of a vehicle (1) according to any one of Claims 1 to 9, **characterized in that** it comprises a lateral wall (101) delimiting a first end opening (102) and a second end opening (103) that is enlarged with respect to said first opening (102), and **in that** said two openings (102, 103) are each of oblong shape and are disposed coaxially with respect to one another.
